(19) Europäisches Patentamt
European Patent Office
Office européen des brevets

(11) Publication number: 0 438 240 A2

(12) # EUROPEAN PATENT APPLICATION

(21) Application number: 91300215.0

(22) Date of filing: 11.01.91

(51) Int. Cl.$^5$: C08F 8/32, C08F 8/48, C08L 23/02, C08L 77/00

A request for correction claim 7 in line with page 11 has been filed pursuant to Rule 88 EPC. A decision on the request will be taken during the proceedings before the Examining Division (Guidelines for Examination in the EPO, A-V, 2.2).

(30) Priority: 16.01.90 US 464803

(43) Date of publication of application: 24.07.91 Bulletin 91/30

(84) Designated Contracting States: AT BE CH DE DK ES FR GB GR IT LI LU NL SE

(71) Applicant: ROHM AND HAAS COMPANY
Independence Mall West
Philadelphia Pennsylvania 19105 (US)

(72) Inventor: Ilenda, Casmir Stanislaus
36 Sima Road
Holland, Pennsylvania 18966 (US)
Inventor: Maxson, Patricia
111 White Oak Road
North Wales, Pennsylvania 19454 (US)
Inventor: Harvey, Noel Gray
1802 Maple Circle
Lansdale, Pennsylvania 19446 (US)
Inventor: Hallden-Abberton, Michael Paul
964 Whitney Lane
Maple Glen, Pennsylvania 19002 (US)
Inventor: Cohen, Leslie Alan
2550 Creek Road
Langhorne, Pennsylvania 19047 (US)
Inventor: Goldman, Theodore Daniel
1290 General DeFermoy Road, Washington's Crossing
Pennsylvania 18977 (US)

(74) Representative: Angell, David Whilton et al
ROHM AND HAAS (UK) LTD. European Operations Patent Department Lennig House
2 Mason's Avenue
Croydon CR9 3NB (GB)

(54) **Imidized segmented copolymers.**

(57) Segmented copolymers having one or more olefin polymer segments and one or more imide-containing are useful for the modification of polyolefins, of polar polymers, and of blends thereof. The polymers can be produced by imidisation of corresponding olefin polymer/(meth)acrylate ester polymer segmented polymer, preferably in a devolatilizing extruder, in the presence of ammonia or primary amines so producing a polymer having one or more segments of polymer containing cyclic imide groups.

EP 0 438 240 A2

# IMIDIZED SEGMENTED COPOLYMERS

This invention is concerned with segmented copolymers containing segments of polyolefin and of polymer containing cyclic 5- or 6-membered imide units, to processes for their manufacture, blends of them with other polymers and with to useful objects made from such blends.

Segmented polymers, as contrasted to random or conventional copolymers of polar vinyl monomers with olefins have been known for some years. Especially of interest have been graft copolymers with a polyolefin trunk and grafted chains of polar polymer, such as methyl methacrylate. Other systems, often referred to as "graft copolymers", wherein maleic anhydride or acrylic acid are grafted to a polyolefin substrate, are actually grafts of oligomers to the polyolefin, the length of such oligomeric units being about one in the case of maleic anhydride or very short in the case of acrylic acid. Such segmented copolymers have been useful in modifying the surface properties of polyolefins, as amine-reactive modified rubbers for impact-modification of polyamides, as additives for modifying the bulk properties of polyolefins, and the like.

A recent improvement in such segmented polymers has been a segmented copolymer of predominantly units derived from a methacrylate ester with a polyolefin, such as polypropylene or polyethylene, prepared under reaction conditions where the weight-average molecular weight of the polymethacrylate segment is greater than about 20,000. Such segmented copolymers are especially useful in improving the sag resistance of polyolefins. They further improve other low-shear rheological properties of polyolefins without a deleterious effect on high-shear behavior. Such polymers and their blends with polyolefins and with polar polymers are more fully disclosed in EP-A-335649 and Danish Application 2120/90.

A similar process can be utilized to prepare segmented copolymers of segments of units predominantly derived from methacrylate esters with elastomeric polyolefins, such as ethylene-propylene copolymers or ethylene-propylene-unconjugated diene (EPDM) terpolymers, the segmented polymethacrylate chains being of a similar high molecular weight. The resulting materials are useful as impact modifiers for polyolefins, as well as for other thermoplastics, such as poly(vinyl chloride). Such segmented polymers are disclosed in Danish Application 2120 /90.

Both graft and block segmented copolymers as desribed above are also useful as compatibilizers for blends of polar and non-polar polymers.

Such segmented copolymers bearing methacrylate ester units in the segment or segments attached to the polyolefin segment or segments have a deficiency ; they lose effectiveness in sag resistance and other heat-sensitive properties when blended with polyolefins and tested at temperatures near or above the glass temperature of the methacrylate segment. Even when the polyolefin retains properties related to its crystallinity, the blend is notably less rigid and less useful in load-bearing applications. It would thus be desirable to increase the glass temperature of the non-olefinic segmented chains. The resulting improved heat-distortion resistance would also be valuable in blends of such segmented copolymers with mixtures of polar and non-polar polymers. A second deficiency is that not all polar polymers are compatible with segmented chains which are predominantly alkyl methacrylate units. It would be desirable to prepare segmented copolymers whose polar segments were broadly compatible with a wider range of polar polymers. Overcoming this deficiency would also be important in compatibilizing blends of polar and non-polar polymers.

Segmented copolymers bearing segments which may be converted to five- or six-membered imide rings are described in the prior art for oligomeric grafts of maleic anhydride onto ethylene-propylene copolymers, for graft polymers of methyl methacrylate onto butadiene-styrene rubbers, and for graft polymers of styrene- maleic anhydride copolymers onto a variety of elastomers, including ethylene-propylene copolymers. In the first instance, such oligomeric or monomeric grafts do not involve grafted segments having a chain length necessary to achieve entanglement interaction with compatible polymers in blends. In the second instance, such grafts to butadiene-styrene elastomers produce material which will not weather well, and are subject to oxidative and thermal degradation under processing conditions, especially in further blending. In the third instance, such grafts require at least about 60% of a vinyl aromatic monomer to be present in the grafted chains, which results in a chain less resistant to ultraviolet exposure, as well as being somewhat less compatible with polar resins.

We have now found that segmented copolymers comprising polyolefin segments, such as polypropylene, polyethylene, or rubbery copolymers of ethylene-propylene, and segments comprising predominantly, and preferably comprising at least 80% by weight, of units derived from methacrylate ester, optionally with acid, amide, or anhydride groups present, may be reacted with ammonia or amines, preferably alkyl amines, and most preferably methylamine, to introduce imide units into the non-polyolefin segments. We have further found that the preferred imide unit is the glutarimide unit, but that maleimide units formed by the imidization of maleic anhydride, maleic acid, monoesters of maleic acid, or diesters of maleic acid, may also be formed and are useful in further aspects of the invention.

We further have found that this conversion can be accomplished by several methods, such as reaction in solution or aqueous suspension, but that a preferred method is by passing the segmented copolymer through an extruder wherein it is contacted with ammonia or an amine.

We have further found that the polymer chains containing imide units but which also contain units from acid and/or anhydride may be further treated with alkylating agents to reduce the content of acid and/or anhydride. We have further found that these segmented copolymers having polyolefin segments and segments containing imide units may be blended with polyolefins to give novel composites with useful properties. We have further found that these segmented copolymers having polyolefin segments and segments containing imide units may also be blended with polar polymers with which similar but non-segmented imide polymers are compatible to give novel composites with useful properties. We have further found that these segmented copolymers having polyolefin segments and segments containing imide units may also be blended with mixtures of non-polar polymers and polar polymers with which similar but non-segmented imide polymers are compatible to give novel ternary composites with useful properties.

Accordingly, in one aspect, this invention provides a segmented copolymer comprising :

a) at least one polyolefin segment ;

b) at least one segment of polymer of at least 20,000 weight average molecular weight containing imide units of the structure

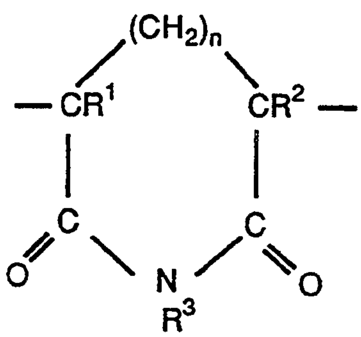

or

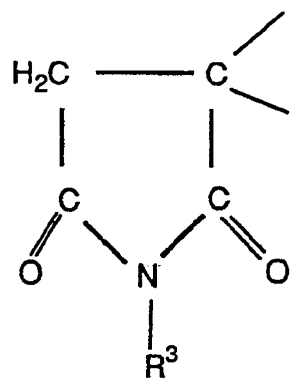

wherein n is 0 or 1, $R^1$ and $R^2$ are separately H or $C_1$-$C_{20}$ alkyl, and $R^3$ is H, alkyl, substituted alkyl, cycloalkyl, substituted cycloalkyl, alkaryl, substituted alkaryl, aryl, substituted aryl, aralkyl, substituted aralkyl, heterocyclic or substituted heterocyclic, which is not a polymer of 60 wt % or more vinyl aromatic monomer units and 40 wt % or less maleimide units.

The segmented copolymer of this invention is either a block copolymer or a graft copolymer. A block copolymer is one where, if A and B represent segments of homopolymers or conventional copolymers, the block copolymer is represented by $A_1$-$B_1$, $A_1$-$B_2$-$A_1$, $A_1$-$B_1$-$A_2$, $B_1$-$A_1$-$B_1$, $B_2$-$A_1$ -$B_1$, $A_1$-$B_2$-$A_2$-$B_2$, $A_1$-$B_1$-$A_2$-$B_2$, and the like, where A and B are joined by covalent bonds. $A_1$, $A_2$, $A_3$ and $B_1$, $B_2$, $B_3$, and the like are compositionally similar but may be of different molecular weights. To differentiate from polymers modified by bonding of only one or a few small molecules, the molecular weights of A and B are such as to be classified as polymers, which we define as comprising at least ten monomer units.

A graft copolymer is one where a trunk of a polyolefin, which we will designate P-(P)n-P, where P is a unit derived from a monomer, has joined to it one or more chains of polymer A, to form structures such as

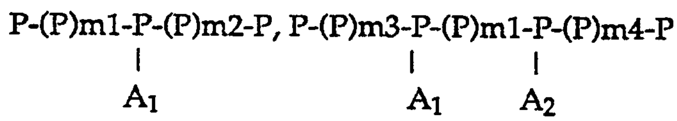

and the like

The segmented copolymers of use in this invention contain polyolefin segments and segments containing predominantly units derived from a methacrylate ester, such as a block copolymer of an ethylene-butylene copolymer segment and a poly(methyl methacrylate) segment, a graft copolymer of a polypropylene trunk and one or more chains of a copolymer of methyl methacrylate and methacylic acid, a graft copolymer of a polyethylene trunk and one or more chains of a copolymer of methyl methacrylate and ethyl acrylate, a graft copolymer of an ethylene-propylene-norbornadiene rubber to which are grafted one or more chains of methyl methacrylate homopolymer, and the like.

The polyolefin segments may be homopolymers of monoolefins, such as homopolymers of ethylene, propylene, n-butene, n-octene, and the like, or they may be copolymers of one or more olefins, such as ethylene-propylene copolymers, or ethylene- alpha-olefin copolymers commonly known as linear low density polyethylene. There may be incorporated relatively small amounts of units from monomers other than monoolefins, such as vinyl aromatics, acrylic monomers, vinyl ethers, and the like.

Copolymers of vinyl esters containing relatively high amounts of units derived from vinyl esters, such as vinyl acetate, may be used. Although the invention does not encompass polymers which contain predominantly diolefin ("diene") monomers, relatively small amounts of a diene monomer, preferably non-conjugated, may be present. Thus, a segment from a terpolymer of ethylene and propylene with up to about 10 weight percent of a non-conjugated diene monomer, such as ethylidene norbornene, norbornadiene, 1,4-pentadiene, 1,4-hexadiene, dicyclopentadiene, and the like, is within the scope of this invention.

The olefin segments may be crystalline or amorphous, rubbery or relatively rigid. For many uses, such as improving sag resistance in blends with polyolefins, the molecular weight of the polyolefin segment should be above about 50,000 weight-average molecular weight, and for ease of processing, below about 400,000 ; however, useful polymers may be made when the polyolefin segments are outside the preferred range of molecular weights.

The segments which contain imide units may be totally imidized, that is, having a very low content of units derived from any other group than the imide group, or units derived from other monomers may also be present. Preferably, the weight fraction of imide units will be from about 10 to about 100%, with from about 40% to about 100% being more preferred. Other units in the segment may be those derived from methacrylate esters, such as alkyl, aryl, alkaryl, aralkyl, cycloalkyl, and heterocyclic esters and substituted alkyl, aryl, alkaryl, aralkyl, cycloalkyl, and heterocyclic esters, from acrylic esters, such as from ethyl acrylate, from unsaturated anhydrides, such as maleic anhydride, itaconic anhydride, and the like, from unsaturated acids, such as methacrylic acid, acrylic acid, acryloxypropionic acid, and the like, from other anhydrides, such as units of methacrylic anhydride,or from unsaturated amides, such as methacrylamide, and the like. Methyl methacrylate is the preferred other unit. Other monomers may be present, such as vinyl aromatic monomers, such as styrene, alpha-methylstyrene, and the like, acrylonitrile, vinyl esters, and the like. Monomers incapable of participating in the imidization reaction should not be present in the original pre-imidization segment in amounts which would substantially prevent cyclization or imide formation.

The present invention does not contemplate polymers wherein the imide segments are of very short chain length, for example less than 20,000 weight average molecular weight such as those derived by imidization of maleic acid "grafts" to polyolefins, wherein said "grafts" are mainly of only one succinic anhydride unit. It further does not contemplate segmented copolymers wherein the imide - containing segment is derived from imidization of a vinyl aromatic copolymer with a maleimide precursor, such as a graft of a copolymer of above about 60 weight percent styrene with up to about 40 weight percent maleic anhydride onto a polyolefin, which graft copolymer is then treated with an amine to form the corresponding imide. In the present invention, it is preferred that, if vinyl aromatic segments be present in the segment which is to be imidized, the amount of vinyl aromatic units in the segment which is imidized be below 50%. The imide structure is a five- or six-membered ring combined into the segmented polymer by two bonds attached to any of the non-carbonyl carbon atoms, but not by bonds through the nitrogen atom. Thus the invention relates to polymers derived from copolymerized or post-formed units from itaconic anhydride i.e. units of the fomula

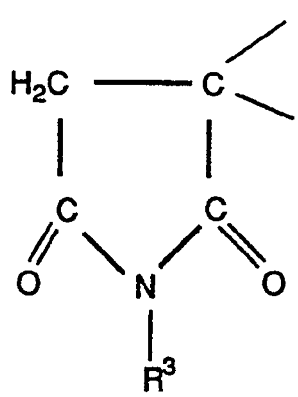

but is preferably concerned with units based on a succinimide or glutarimide ring, i.e., imide units of the structure

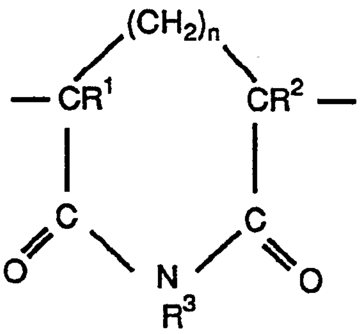

with n, 0 or 1. $R^1$ and $R^2$ may be H or alkyl of from $C_1$ to $C_{20}$ ; if n is 1, the more preferred imides are those where $R^1$ and $R^2$ are methyl, whereas if n is 0, the more preferred imides are those where $R^1$ and $R^2$ are H.

$R^3$ may be H, alkyl (straight or branched chain) from one to about twenty carbon atoms, such as methyl, butyl, cetyl, and the like, alkyl (preferably $C_1$-$C_{20}$) substituted by such groups as halo, (di)alkyl amino, such as for example trifluoroalkyl (especially trifluoromethyl) 4-chloroalkyl and 2-dimethylaminoethyl, cycloalkyl, optionally substituted with, for example, alkyl, wherein cycloalkyl has from 4 to 7 carbon atoms, such as cyclohexyl and 4-methylcyclopentyl, aryl, optionally substituted with, for example, halo, such as phenyl, 4-chlorophenyl, and 2-naphthyl, aralkyl, such as benzyl and phenethyl, alkaryl, such as 2-methylphenyl, or heterocyclic, such as tetrahydrofurfuryl and N-methyl-4-piperidinyl. Other candidate substituted alkyl or aryl groups are aryl or alkyl sulphides or sulphones ($RSO_2NH$-) and RO-CO- and RCO- (where R is alkyl or aryl). These are also candidates for substitutents in the alkyl or aryl groups, as also is RCOO-. Other suitable heterocyclic groups include oxetanyl, furanyl, morpholinyl, thiopheneyl and thiazolinyl. Preferred as $R^3$ is H or methyl.

The molecular weight (Mw or weight-average) of the non-polyolefin segments which contain imide groups may be from about 20,000 upwards. The lower limit is desired to obtain chain entanglements when blended with polar polymers or to achieve the maximum glass temperature enhancement. An upper limit of about 100,000 is preferred. At higher Mw, polymer flow may be affected, and it is difficult effectively to form a segmented polymer for use in imidization with acceptable yield of graft copolymer if the molecular weight of the grafted chains is too high. It is however possible to achieve some improvement over the art outside this preferred molecular weight range.

The weight ratio of polyolefin segments to segments containing imide may vary greatly, depending on the ultimate use of the final segmented copolymer. In general, the range of 10 to 90 parts of polyolefin segment to 90 to 10 parts of imide polymer segment is contemplated, with a range of 30 to 70 parts of polyolefin segment to 70 to 30 parts of segment containing imide groups preferred for ease of preparation.

The number of segments may also be varied. For a graft copolymer, useful effects may be accomplished with an average of one grafted chain per polyolefin trunk. In segmented polymers, single segments may be utilized, or there may be two or more segments of imidized polymer for each polyolefin segment. Other combinations may be contemplated.

For segmented polymers containing maleimide units in the non-polyolefin segment, the segmented structure may be obtained by copolymerization of a maleimide monomer, such as maleimide itself, N-methylmaleimide, N-cetylmaleimide, N-cyclohexylmaleimide, N-phenylmaleimide, N-4-chlorophenylmaleimide, and the like, during the preparation of the non-polyolefin segment or segments, which may be simultaneously or later joined to the polyolefin segments to form the segmented copolymer.

However, for a broader range of imide structures and compositions and for ease in manufacture, it is preferable to form the cyclic imide by post-reaction on a pre-formed segment capable of being converted to form such cyclic imide. This segment, which we will call the precursor segment, will either contain cyclic groups, especially anhydride groups, which can be directly reacted with an appropriate amine to form the cyclic imide group, or it will contain non-cyclic groups which may be cyclized eventually to form the cyclic imide structure.

In one embodiment, a copolymer of methyl methacrylate, styrene, and maleic anhydride may be polymerized in the presence of a polyolefin under conditions such that a graft copolymer is formed, and that graft copolymer containing a succinic anhydride ring may be directly reacted with 4-chloroaniline to form a segment containing a 4-chlorophenylsuccinimide ring.

In a second embodiment, a block copolymer having two poly(methyl methacrylate) segments attached to a segment formed from butadiene may be prepared by multistep anionic polymerization. The resulting block copolymer may be hydrogenated under pressure to form a poly(methacrylate)//poly(ethylene/butylene)//poly(methacrylate) block terpolymer, which may be subsequently treated in chlorobenzene at a temperature above 150°C with ammonia to form a block terpolymer having two blocks containing glutarimide units attached

to a ethylene-butylene segment.

In a third embodiment, a graft copolymer of methyl methacrylate may be prepared in hydrocarbon solution onto a polypropylene backbone at a temperature above about 150°C with a slow generation of radicals and continuous addition of monomer. The resulting graft copolymer may then be processed in a devolatilizing extruder with an amine, such as ammonia or methylamine, at a temperature between 200 to 250°C to form the glutarimide ring.

In a fourth embodiment, a polymer of methacrylic acid may be formed in the presence of an ethylene/propylene/diene elastomer to form a graft copolymer. The graft copolymer may be then reacted with ammonia in a devolatilizing extruder to form a graft having (N-hydrogen)imide groups in the backbone.

Thus, the process for preparing such segmented copolymers comprises :

a) preparing a segmented copolymer wherein at least one segment comprises polyolefin and at least one segment comprises copolymer containing units of at least one structure

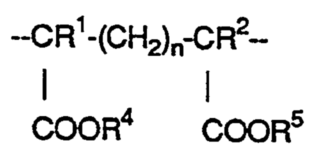

or

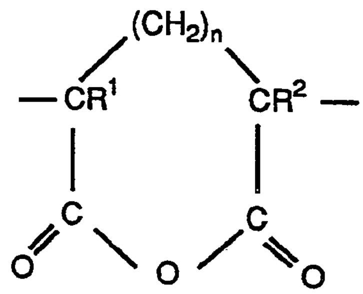

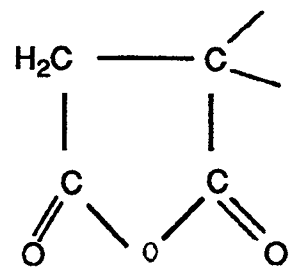

or

wherein $R^4$ and $R^5$ are H, alkyl, or $-CONR^6R^7$, where $R^6$ and $R^7$ are H on alkyl, n is 0 or 1, and $R^1$ and $R^2$ are H or $C_1$ to $C_{20}$ alkyl, preferably H or $CH_3$ ;

b) reacting the segmented copolymer or (a) with primary amine $R^3NH_2$, wherein $R^3$ is H, alkyl, alkaryl, aryl, aralkyl, cycloalkyl, or heterocyclic, under conditions of temperature and pressure sufficient to

convert units of at least one structure

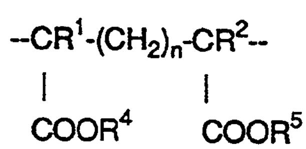

or

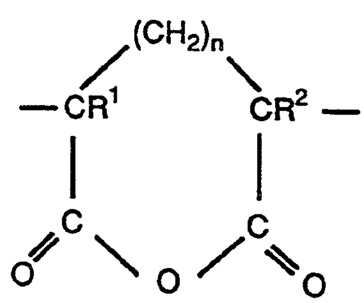

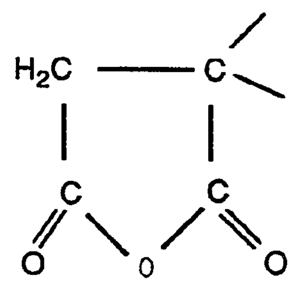

or

to units of the structure

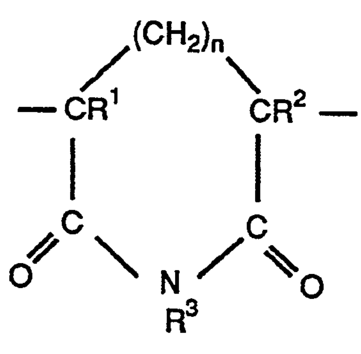

or

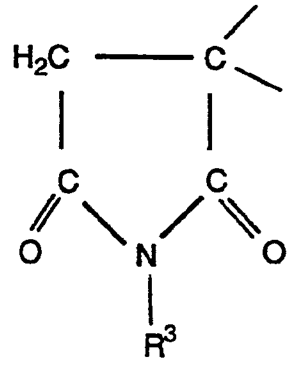

with n=0 or 1, so as to form the segmented copolymer ;

c) optionally purifying the imidised segmented copolymer by removal of unreacted primary amine ;

d) optionally reacting the imidised segmented copolymer with an alkylating agent so as substantially to lower the content of units derived from acid or anhydride groups ;

e) optionally isolating the imidised segmented copolymer in solid form.

Reaction (b) may be conducted in any of a number of ways, as long as the conditions are suitable for imide formation. The starting polymer may be a solid, in "molten" form, in solution, or in aqueous dispersion. The amine may be supplied as a gas, a solid or liquid. The extent of imide formation is controlled by the temperature, the pressure and the time of reaction, and by the amount of amine used. Generally an excess of amine is used relative to the potential number of imide groups which may be formed. Preferred reaction conditions include the use of a homogeneous media, such as a polymer melt or polymer solution of another segmented copolymer, temperatures of imidization above at least 150°C., and good mixing. A suitable process, although not taught for preparing polymers which do not contain polyolefin segments, is given inU.S-A-4,246,374.

It is noted that certain segmented polymers may be somewhat altered in molecular weight when subjected to the fairly severe conditions of heat and shear encountered in forming the imide groups. Thus, the molecular weight of a segment containing polypropylene or containing methyl methacrylate may be decreased by the reaction with amine to the extent that the polymer is less useful than expected as a melt strength additive for polypropylene, although still useful as a compatibilizing agent. By experimentation with the imidization conditions, or by incorporation of known stabilizers for glutarimides and olefin//methacrylic graft copolymers, such as phenolic, phosphito, or thio-containing compounds, such loss in molecular weight may be controlled.

It is preferred to remove excess amine and reaction by-products from the imidized segmented copolymer prior to end use. This may be accomplishing by washing the polymer, by dissolving and reprecipitating, or preferably by passing the molten polymer through a devolatilizing extruder with sufficient vacuum applied so that essentially all the excess amine is removed. The polymer may be isolated from the reaction media by many routes. For example, a solution may be cooled to precipitate the polymer, or a precipitation non-solvent may be added. If in aqueous dispersion, the polymer may be filtered and washed. If in the melt, the polymer melt may be passed through an extrusion die, and strands of polymer cut into pellets.

For blends of polyglutarimides with many, but not all, polar polymers, U.S.-A- 4,727,117, should be consulted. This teaches that free acid and/or anhydride groups in a polyglutarimide may be partially or totally eliminated by treatment with an appropriate alkylating agent prior to use. This process can also be applied to the segmented polymers of the present invention. One very useful process is to conduct the imidization reaction so that the reaction with the primary amine, the purification, and the alkylation reaction are all conducted in a devolatilizing extruder in a sequential manner without isolation. The resulting polymers may exhibit improved compatibility with many polar polymers, or better thermal stability or improved color.

An alternative compounding sequence is to admix the imidized segmented copolymer with either the polar polymer or the non-polar polymer, especially if reaction involving free acid or anhydride groups is anticipated, followed by combination of that admixture with one or more other polar or non-polar polymers.

The segmented polymers of the present invention are useful as additives for polar polymers, for non-polar polymers, and for mixtures of polar and non-polar polymers. It is preferred that one segment of the segmented polymer is compatible with the polymeric matrix. Thus, a segmented copolymer which is a graft of polymer containing glutarimide units onto a polypropylene trunk will be useful in modifying the properties of a polypropylene matrix, in ways such as improvement of melt strength or sag resistance, in imparting appropriate functional groups for ink adhesion and the like, in aiding of the processing of the polypropylene into bottles, sheet, and film, in preparation of foamed objects, and the like. This same segmented copolymer will be useful in modification of polyethylene, whether high density, low density, or linear low density polyethylene, but it is preferred to use a segmented polymer containing segments with imide groups and segments of polyethylene for such modification of polyethylene.

When polypropylene is modified with the segmented copolymers of the present invention, it may be employed in the manufacture of many useful objects in profile form, such as clips, scrapers, luggage beads, garden edging, door stripping, gutters, downspouts, corrugated roofing, window and door casings, window tracks, siding, rub/bruise strips, such as for cars and appliances, coated wire, picture framing, pipe for drain, waste, or vent use, electrical conduit, ducts, sheathings for wood, protective fascia, such as for automobiles, automotive liners, appliance components such as liners, hinges, edgings, trays, and the like, beam covers, straws for consuming drinks, troughs, corrugated tubing, support poles, such as for plants, ski poles, and the like.

Other uses involving modification of nucleation, barrier improvements, and rheology behavior will be noted for the blends of the segmented copolymers when blended with polyolefin.

Thus thermoformed articles, such as cups, vessels, bottles, equipment housing, boxy articles, panels, raised lettering signs, trays, automotive parts, appliance parts, refrigerator doors, refrigerator liners, shower

stalls, articles for construction and housing uses, tubs, plumbing fixtures, multilayer structures, and the like, of polyolefins containing the blends are expected to exhibit improvements in uniformity of wall thickness, deeper draw, and the like.

Sheet and film articles containing the segmented copolymers will be useful in food packaging, blister packaging, and thermoformed molded articles. The polyolefin blends so modified will also be useful in blown-film calendering.

Such blends will also be useful in blow-molded products such as business machine parts, automotive parts, coolant overflow containers, bottles with barrier properties, packaging articles, and the like. In foamed articles, where a gas is used to produce a cell structure resulting in lighter-weight parts, the segmented copolymers will impart melt strength characteristics to aid in retaining structure of the foam. Many uses, such as wood molding substitutes, seats, cushions, packaging materials, floor mats, disposable trays, sound insulation, crash pads, sterilizable trays, fast-food, frozen-food and soup containers, disposable cups and lids, automotive rear shelves, dash pockets, cowl liners, protective padding, and steering wheel pads, insulation, interior trim, sail- and other boat decking, toys, appliances, flooring, flower pots, insulation, carpet underlayers, gap fillers, room dividers, mobile home skirting, decorative flooring, cable insulation, water conveyance, such as pipes, gutters, and the like, may be found for such blends.

Injection-molding of such polyolefin blends modified with the present segmented copolymers, such as toys, liners, automotive parts, such as pump components, water reservoirs, blower wheels, trim knobs, lock handles, and the like, medical uses, such as cups, bowls, syringes, containers, and packaging, appliance parts, laundry containers, recording device containers, such as cassettes, film spindles, and plugs, and the like, may be accomplished.

Uses in rotary molding, stamping, and the like, common for polyolefins, should be enhanced by the presence of the novel segmented copolymers. A segmented copolymer containing polypropylene or polyethylene, especially polyethylene, segments, and segments with imide units will be useful in blends with polyethylene for improvement of rigidity of molded, extruded, blow- molded, or calendered objects, such as sheet, drums, containers, or bottles, as well as for many of the above uses noted for modified polypropylene.

Other polyolefins which may be modified by imidized segmented copolymers of the present invention include polybutenes, such as poly(butene-1), polyisobutylene, and the like, poly(4-methylpentene-1), and polyolefins derived from higher alkenes, copolymers of ethylene and/or propylene with such other olefins or with non-conjugated dienes.

The segmented copolymers of the present invention are also useful in blends with polar polymers with which polar polymer the imide segment is compatible. The advantage of such blends is that they generally exhibit a better combination of properties which may include better melt viscosity, greater weatherability, greater impact resistance, better ductility, and better solvent resistance. Such uses include blending an imidized graft copolymer of poly(methyl methacrylate) onto ethylene/propylene or ethylene/propylene/diene rubbery polymer with a polar thermoplastic, such as poly(vinyl chloride), poly(methyl methacrylate), a styrene/acrylonitrile copolymer of a compositional range which is compatible with a segment having glutarimide groups, or a matrix polymer based on glutarimide units, such as a polymer made by treatment of a methyl methacrylate polymer with methylamine as taught by Kopchik, to improve impact strength of molded or extruded objects, or the blending of an imidized graft copolymer of a poly(alkyl methacrylate/alkyl acrylate) copolymer onto polypropylene with a thermoplastic to lower water uptake or to give better processability to the blend. Another use is the blending of such segmented copolymers, especially with additional polypropylene or polyethylene scrap, or with scrap polar polymers such as poly(vinyl chloride) or poly(ethylene terephthalate) to prepare blends with physical properties adequate for uses to which recycled scrap is often put to use, such as baling straps, pallets for drums or boxes, and the like.

In some instances, it will be desirable that acid and anhydride content of the imide segment be reduced or essentially eliminated, as by treatment with the alkylating groups as taught as in Examples 3 - 4. Such acid-reduced segmented copolymers will be found to be more compatible with certain polar polymers, in a manner similar to that taught for acid-reduced non-segmented imidized polymers in U.S.-A- 4,727,117, column 9, line 15 to column 10, line 17.

However, if the imide segment further contains reactive functionality such as acid or anhydride groups, the imidized segmented copolymer may be blended with a polar polymer having groups capable of reacting with such acid or anhydride groups. For example, amine-terminated polycaprolactam will react with such groups, and that reaction may be catalyzed or extended to higher conversion by catalysis, in a manner similar to that discussed in EP-A-335649 and assigned to the assignee of the present invention. Thus, the imidized segmented copolymers of the present invention, especially those with acid and/or anhydride groups, will be useful when blended with polyamides, especially amine-terminated polyamides, for imparting higher melt viscosity, especially at low shear, for thermoforming and blow-molding uses. Other uses of nylon polymers blended or reacted

with the segmented copolymers of this invention include items for automotive uses, such as wheel covers, trim, and covers, power tool housings business machines and computer housings, bicycle wheels, bowling pins, tennis frames, and other recreational uses, and the like. Segmented polymers where one segment is elastomeric, such as an ethylene-butylene copolymer, and one segment has imide functionality, preferably also with acid or anhydride functionality, will be useful as impact modifiers for polyamides, especially amine-terminated polyamides.

Similar uses to the polyamide blends will be seen with blends of the segmented copolymers with polyesters, such as poly(ethylene terephthalate), poly(butylene terephthalate), and the like. Improvements in melt strength, flexural modulus, heat distortion temperature, and water resistance should prove useful in packaging applications and blow-molding applications. With rubbery segments in the segmented copolymer, impact strength will be enhanced.

Such segmented polymers with rubbery segments may be blended with styrene/acrylonitrile polymers to obtain properties similar to ABS but with better resistance to weathering. Similar results will be seen when the imidized segmented copolymers with rubbery segments are used to replace butadiene-based impact modifiers in PVC or in impact-modified acrylic polymers, such as toughened poly(methyl methacrylate), or toughened alpha-methylstyrene/methyl methacrylate copolymers.

Another use of the segmented copolymers of the present invention will be as tie layer compatibilizing polymers between a polyolefin substrate and a barrier film, the barrier being nylon or glutarimide or an ethylene-vinyl alcohol copolymer. The latter system, such as laminates of polypropylene with poly(ethylene-vinyl alcohol) has poor adhesion, and a polymer with segments separately compatible with the two layers will enhance adhesion.

The segmented copolymers of the present invention have also been shown to be useful in blends of non-polar and polar polymers as compatibilizing agents, as long as the segments of the segmented copolymer are compatible with their respective polar or non-polar counterparts. Thus, a graft copolymer of polypropylene and imidized poly(methyl methacrylate) may be used to compatibilize and improve the physical properties of mixtures of polypropylene and a polyamide or a polyester.

The segmented polymers containing imide segments of this invention, particularly those containing polyglutarimide segments, may be blended with other thermoplastic polymers (as used herein "-" indicates blended polymers, "/" copolymers, and "//" graft or block polymers) such as butadiene/styrene/(meth)acrylic, styrene/(meth)acrylic, and (meth)acrylic multistage polymers ; butadiene/styrene rubbers, ethylene/propylene/diene rubbers, polyamides, polyamide-multistage polymer blends, ethylene/vinyl acetate, styrene/acrylonitrile, styrene/acrylonitrile-multistage polymer blends,styrene/acrylonitrile-ethylene/propylene/diene rubber blends, alpha-methylstyrene/acrylonitrile, alpha-methylstyrene/styrene/acrylonitrile, alpha-methylstyrene/methyl methacrylate/ethyl acrylate, butadiene//acrylonitrile/styrene, polycarbonate, polycarbonate-multistage polymer blends, polybutylene terephthalate, polybutylene terephthalate-polycarbonate blends, polybutylene terephthalate-multistage polymer blends, polybutylene terephthalate/polytetrahydrofuran, polyvinyl chloride, polyvinyl chloride-multistage polymer blends, polyvinyl chloride-(meth)acrylate blends, chlorinated polyvinyl chloride, acrylonitrile/(meth)acrylate-multistage polymer blends, acrylonitrile/(meth)acrylate/styrene, epichlorohydrin/bisphenol-A copolymers, (often designated "phenoxy" resin), polyethylene terephthalate or other polyalkylene terephthalate, polyethylene terephthalate-glycol modified, polyethylene terephthalate-polycarbonate blends, polycaprolactone, polyarylate, copolyester of bisphenol-A with isophthalic and/or terephthalic acids, poly(meth)acrylates, polyacetal, polystyrene, high-impact polystyrene, styrene/maleic anhydride, styrene/maleimide, polyolefins, polyvinylidene fluoride, polyvinylidene fluoride-multistage polymer blends, cellulosics, polyethylene oxide, polyamideimide, polyetherester, polyetheresteramide and polyetheramide, polyphenylene sulfide, polyphenylene oxide, polysulfone, polyphenylene oxide- polystyrene blends, polyphenylene oxide-high impact polystyrene blends, polyvinylidene chloride, polyvinylidene chloride/(meth)acrylonitrile, polyvinylidene chloride/(meth)acrylate, polyvinyl alcohol, ethylene-vinyl alcohol copolymers, polyvinyl acetate, polyetheretherketone, polyetherimide, thermoplastic polyimides, and other polymer types. Random or block copolymers which combine the different functionalities can also be used, and ternary or higher blends can be made from combinations of any of these polymer types with the imidized segmented copolymers.

To improve compatibility with the matrix polymer,appropriate changes may be made in the composition of either phase of the segmented copolymer. Thus, it will be preferred to employ segments of polyethylene when blending with a polyethylene matrix polymer. Similarly, it will be preferred to employ a segmented copolymer prepared from $R^4$ being a higher alkyl group, especially with maintenance of such groups in the segment, or with R3 a higher alkyl group, when blending with bis-phenol A polycarbonate as the matrix polymer ; typical of useful alkyl groups which do not adversely affect service temperature are cyclohexyl and isobornyl.

The imidized segmented copolymers and blends with other polymer systems can be further modified by the incorporation of glass or other fibers, or particulate fillers or reinforcing agents such as talc or other minerals,

glass spheres, or metallic particles. In general, the imidized segmented copolymers will exhibit good adhesion to glass and other inorganic fillers. Further modification of properties of the imidized segmented copolymers and blends can be obtained by incorporating additives such as flame retardants, blowing agents, antioxidants, thermal stabilizers, pigments, flatting agents, lubricants, antistatic agents, conductive materials, toners or UV stabilizers.

Blends of olefin polymers and polar polymers compatibilized with the imidized segmented copolymers of the present invention will be useful in a variety of applications. Combinations can be realized which exhibit toughness, heat resistance, processability, low moisture absorption, good surface appearance, chemical resistance, creep resistance, and the like ; with suitable additives, weatherable and radiation resistant compounds can be achieved. The presence of the compatibilizing segmented copolymers may in certain cases improve stiffness, improve melt strength, and impart improved barrier properties against gases and liquids. The blends may be processed by blow molding, thermoforming, and injection molding.

Uses in automotive, such as car, bus, truck, and motorcycle, applications include instrument panels, deck shelves, interior post surrounds, window surrounds, air vents, visors, wheel covers, spoilers, wheel wells, head rests, protective grills, arm rests, fascia, seatbacks, rocker panels, bumpers, handles, interior and exterior trim, fasteners, body panels, and certain under-the-hood uses, such as fluid containers, distributor caps, valve covers, damping insulation, and the like. Similar uses may be found for such blends in other transportation areas, such as as railroad cars and airplanes, such as in seating, seat surrounds, lavatory facilities, luggage compartments and bins, tray tables, and the like.

Non-automotive applications may include construction uses, such as windows, doors, window and door frames, siding, pipe, gutters, downspouts, air conditioning ducts, traps, weatherstripping, gaskets, fencing, replacement for wooden railroad ties, plastic bricks, concrete filler, hardware fixtures such as cabinet hinges, axles, lock mechanisms, electrical outlet plates and child-proof safety plugs, lavatory and bath units, cabinets, and the like ; business machines, such as computer housings, keyboards, TV cabinets, and the like ; appliances, such as refrigerator shells and door liners, washer panels, portable appliance housings, electrical insulation, power tool housings, such as for drills, sanders, saws, and the like ; electronic and electrical uses, such as circuit-board assembly, lamps, support for computer components, housings for stereo units, and the like ; musical instrument housings, piano keys, guitar picks, and the like ; consumer products, such as trash disposal containers, camera,portable tape recorder, and VCR housings, housings for lawnmowers and snowblowers, lawn edgings, washing machine tubs, attache cases, suitcases, shades, pump components, modular furniture, baskets, bowls, pots and containers for plants, open-structured containers, and the like.

Certain of these blends will be clear or will transmit light readily, and may have additional uses such as glazing, drinking containers, high intensity light fixtures, lenses, laboratory ware, translucent or transparent medical ware, translucent or transparent food packaging, and the like.

Non-woven fabrics may be formed which may be useful as clothing, sheets, bandages,carpet backing, doll hair, webbing, cigarette filters, strapping, rope, twine, bristles, rugs, and the like.

Toys or recreational objects, such as small molded dolls, toy automobiles, and the like, tricycle components, bicycle components, interlocking building pieces, novelty items, encapsulated magnets, surfboards, boat decks, swimming pool floats, swimming pool liners, frisbees, snow sliding toys, ski equipment, gameboards, and the like, may be prepared by conventional processing techniques.

The blends of the present invention may be useful in food applications, such as containers for food and drink, films for food packaging, such as coextruded film with barrier properties, as bags and other carriers, as freezeable, ovenable, or microwaveable trays, microwaveable cookware, and the like. They may also be useful in medical applications, such as containers, films, bags for drainage, ostomy, dialysis, and the like.

The following examples are merely intended to illustrate the present invention. All proportions are percentages by weight unless otherwise indicated, and all reagents of good commercial quality. Physical tests on the polymer blends are by well-known methods as described in test methods of the American Society for Testing Materials. In the Tables, the term "load at break" refers to the highest load the material bears during the breaking process, not the load at which breaking first occurs.

EXAMPLE 1 This example illustrates the preparation of graft copolymer of a copolymer of methyl methacrylate 95/ ethyl acrylate 5 onto polypropylene. Several preparations were combined. In all but the last of these preparations, radicals are generated at the rate of 0.000070 moles per liter per minute (radical flux). Monomer and initiator are fed over 120 minutes and the theoretical (100% conversion) solids at the end of the reaction is 50%.

A 380-liter reactor equipped with a pitched-blade turbine agitator was charged with 86.4 kg of an inert hydrocarbon solvent which is a mixture of 2-methylalkanes of 6 to 12 carbon atoms and 34.5 kg of polypropylene homopolymer, melt flow rate (mfr) =4. After deoxygenating (applying vacuum to degas, followed by pressurizing with nitrogen to atmospheric pressure) through three cycles, it was pressurized to 10.3 kPa with nitrogen and

heated to 150 C over 2 hours. A pressure of 241 kPa was maintained while the batch was held at 150 C for 3 hours. Two solutions were added over a fifteen minute period. The first consisted of 59 g of di(t-butyl) peroxide (DBTBPO) in 841 g of the hydrocarbon solvent. The second consisted of 0.32 kg of ethyl acrylate and 6.14 kg of methyl methacrylate. Addition of the first solution was then continued at a lower rate to feed an additional 103 g of DTBPO and 1479 g of the hydrocarbon solvent over 105 minutes. At the same time the monomer addition of 2.26 kg of ethyl acrylate and 43.0 kg of methyl methacrylate was continued over 105 minutes. Reaction exotherm increased the temperature to about 160 C. After the feed was complete, 5 kg of the hydrocarbon solvent was fed into the reaction mixture.

The reaction mixture was held in the reaction kettle for an additional 30 minutes. It was then transferred to a second kettle which was also under pressure at 150 C. During the transfer a solution of 80 g of di-tertiary dodecyl disulfide in 320 g of the hydrocarbon solvent was added to the second kettle. Also during this transfer three 4.53 kg portions of the hydrocarbon solvent were fed into the reaction kettle. Material in this second kettle was fed to a 20.3-mm Welding Engineers twin-screw extruder where devolatilization occurred.

During the devolatilization the next batch was prepared in the reaction kettle. It was transferred to the extruder feed kettle while extrusion continued. In this manner several batches were made in a "semi-batch" manner, that is, batchwise in the reactor with continuous feed to the extruder.

In the final preparation of the blend, radical flux was 0.000050 (42 g DTBPO + 858 g of the hydrocarbon solvent in the first feed, 73 g DTBPO + 1502 g of the hydrocarbon solvent in the second feed).

The final blend, designated Example 1, was prepared by blending pellets from 13 batches prepared as described and one batch of the final variant. The molecular weight of methacrylic polymer extracted from the final blend was Mw > 20,000. The glass temperature by DSC was 103°C ; the Vicat softening temperature was 123-124°C. The actual composition as determined from carbon-hydrogen analysis was 45% polypropylene/ 55% (methyl methacrylate/ethyl acrylate (95/5).

EXAMPLES 2 - 3 These examples illustrate the preparation of an imidized graft polymer of methyl methacrylate onto propylene. The graft copolymer of Example 1 was fed to a 20.3 mm. tangential counter-rotating twin screw extruder equipped with means for plasticating and melting the polymer, for adding ammonia or an amine under pressure, an in-line means (which zone was used only as a conveying zone in this experiment) for adding alkylating agent, means for devolatilization of residual amine, (optionally) excess alkylating agent, and reaction products, and for removal of the molten polymer as a strand. The system is substantially as described in Examples 21-27 of U.S.A-4,727,117, incorporated herein by reference.

At a feed rate of polymer of 40 grams/min., a screw speed of 385 rpm, a barrel temperature in the imidization zone of 205°C., an amine feed rate of 12.5 grams/min., and a gauge pressure of 4130 kPa, the graft copolymer was reacted with methylamine. The isolated polymer contained 0.82% nitrogen, exhibited a Vicat softening temperature of 136-138°C and a Tg by DSC of 124°C. Ungrafted imidized methacrylic polymer was removed from the polymer by extraction with acetone ; the remaining polymer contained 0.29% nitrogen.

The graft copolymer was not soluble in methylene chloride-methanol, the media used for acid titration, so no determination of acid or anhydride groups could be made. This sample was designated the polymer of Example 2.

In a control experiment, designated Example 3, the graft copolymer was treated under the same extrusion conditions, but no amine was fed to the reactor. This preparation is designated Example 3. The Vicat softening point of this polymer was 123-4°C. As expected, the nitrogen content of this polymer was 0.0 %

EXAMPLES 4-5 These examples illustrate the preparation of an imidized methyl methacrylate//polypropylene graft copolymer which has been further reacted to remove acid and/or anhydride groups.

The imidization of Example 2 was conducted, but after imidization, the melt was conducted into a zone equipped for means for adding an alkylating agent, means of removing volatile excess alkylating agent and reaction products, and an exit die for stranding of the acid-reduced polymer. The reaction conditions are again similar to those of U.S.-A-4,727,117, incorporated by reference.

The melt from Example 2 was reacted in the extruder at a temperature of 216°C., with dimethyl carbonate (DMC) as the alkylating agent at a pressure of 2240 kPa followed by vacuum devolatilization and extrusion into a strand which is cut into pellets. The resulting polymer was also insoluble in the solvent for determination of acid groups, so determination of residual acid could not be made. The polymer had a nitrogen content of 1.35%, a Vicat softening temperature of 132.5 - 134.5°C., and a Tg by DSC of 120°C. It is designated the polymer of Example 4. In a similar manner, a melt prepared as in Example 2, but at an amine feed rate of 22 g./min., was reacted in the extruder at a temperature of 214°C., with dimethyl carbonate as the alkylating agent at a pressure of 2240 kPa, followed by vacuum devolatilization and extrusion into a strand which is cut into pellets. The resulting polymer was still insoluble in the solvent for determination of acid groups, so determination of residual acid could not be made. The polymer had a nitrogen content of 2.06%, a Vicat softening temperature of 139.5-140°C, and a Tg by DSC of 120°C. It is designated the polymer of Example 5.

EXAMPLES 6 - 7 These examples illustrate blends of the graft copolymer of Example 1 with a methyl methacrylate homopolymer of MW 150,000 (weight average). To aid in processing the graft copolymer through the extruder, blends of 80/ /20 (Example 6) and 60 / /40 (Example 7) of the methyl methacrylate homopolymer and the graft copolymer of Example 1, respectively, were prepared for imidization. Blending was accomplished by tumbling pellets. The blends were processed in the extruder without imidization under conditions similar to those of Example 3 ; the resulting processed blends exhibited Vicat softening temperatures of 121.5°C for processed Example 6 and 123°C for processed Example 7 ; both processed samples had a Tg by DSC of 115°C.

EXAMPLES 8 - 16 These examples illustrate the imidization of the blends designated Example 6 and Example 7, and alkylation of some of the imidized blends. The equipment and techniques were as described in Examples 2 and 3. In the following table, the rate of feed of amine and dimethyl carbonate are listed as rate amine/rate DMC, both in grams/min.

| Ex. | Feed-stock, Examp. | Pressure of amine, kPa | Imidization zone, °C | Alkylating zone, °C | Pressure of DMC, kPa | Rate, amine/DMC, g./min. |
|---|---|---|---|---|---|---|
| 8 | 6 | 2760 | 205-10 | 300 | -- | 12.5/-- |
| 9 | 6 | 3450 | 205-10 | 300 | -- | 12.5/-- |
| 10 | 6 | 4130 | 205-10 | 300 | -- | 15.0/-- |
| 11 | 6 | 4130 | 205-10 | 300 | -- | 15.0/-- |
| 12 | 6 | 4130 | 205-10 | 300 | -- | 19.0/-- |
| 13 | 6 | 4130 | 205-10 | 300 | 2760 | 15.0/10 |
| 14 | 6 | 4130 | 205-10 | 300 | 2760 | 19.0/10 |
| 15 | 6 | 3790 | 250 | 300 | -- | 19.0/-- |
| 16 | 7 | 3790 | 250 | 300 | 2760 | 19.0/10 |

The analytical results for the polymers of Examples 8 to 15 are shown below. For samples 8 -12, it was possible to measure acid content, as described in U.S. 4,727,117. The reduction in acid content was not measured for Examples 13-14, and Examples 15 -16 did not dissolve in the titration solvent, so no values could be determined.

| Polymer, Example # | Vicat, °C | Tg,DSC °C | %N | % total acid |
|---|---|---|---|---|
| 8 | 142 | 134 | 4.10 | 3.96 |
| 9 | 143-4 | 140 | 4.58 | 3.67 |
| 10 | 144-6 | 140 | 4.72 | 3.80 |
| 11 | 147-8 | 141 | 5.26 | 3.58 |
| 12 | 155 | 145 | 5.98 | 3.86 |
| 13 | 148 | 143 | 5.69 | -- |
| 14 | 146 | 140 | 5.55 | -- |
| 15 | 151 | 138 | 4.98 | -- |
| 16 | 146,143 | 138 | 4.49 | -- |

EXAMPLE 17 This example illustrates the preparation of a graft of methyl methacrylate to an ethylene-propylene-diene rubber for subsequent imidization. The graft was 54% EPDM and 46% of a MMA/ethyl acrylate

(98/2) copolymer. The EPDM used in this preparation is DuPont Nordel 2722, a partially crystalline terpolymer of ethylene, propylene, and 1,4-hexadiene. The approximate composition is 55-65% ethylene, 30-40% propylene, and 5-10% hexadiene. The measured glass transition temperature (by DSC) is -40 degrees C. The broad melting endotherm has a maximum at 55 degrees C.

The EPDM-methacrylic graft copolymer was made by polymerizing a 2% ethyl acrylate (EA) - 98% methyl methacrylate (MMA) monomer mixture in the presence of an equal weight of EPDM. Radicals were generated from di-tertiary-butyl peroxide (DTBPO) at the rate of 0.00010 moles per liter per minute (radical flux). Monomer and initiator were fed over 30 minutes and the theoretical (100% conversion) solids at the end of the reaction is 50%. A 1.7 gallon reactor equipped with a double helical agitator (115 rpm) was charged with 1980 g Isopar E and heated to 150 degrees C. 1000 g of EPDM (DuPont Nordel 2722) was fed to the reactor via a melt extruder at a rate of about 10 g per minute. After a 45 minute hold at 150 degrees C, the addition of monomer and initiator solutions was begun. Over a two minute period two solutions were added. The first consisted of 2.00 g of di-t-butyl peroxide in 19 g of Isopar E, a mixture of 2-methylhexanes described in Example 1. The second consisted of 0.07 g of di-t-butyl peroxide in 1.3 g of ethyl acrylate and 66 g of methyl methacrylate. For the next 28 minutes the second feed was continued at the same rate (0.97 g of di-t-butyl peroxide and 19 g of ethyl acrylate in 918 g of methyl methacrylate). This feed schedule results in a radical flux of 0.00010 during the feed. After the feed was complete the reaction was held at 150 degrees C for 15 minutes. Then it was devolatilized by passing through a 30 mm Werner-Pfleiderer extruder with vacuum vents at 200-250°C. Elemental analysis (74.3% C, 12.0% H, and 13.6% O) revealed a composition of 54% EPDM and 46% acrylic.

The graft copolymer was fractionated to determine its composition. A 1 gram sample was dissolved in 12 ml THF by warming slightly and shaking in a centrifuge tube. Once all had dissolved, the EPDM containing portions were precipitated by adding 12 ml of acetone. The material was then centrifuged at 17,000 rpm for 2 hours. A plug consisting of all EPDM containing polymer collected on the bottom of the centrifuge tube. The solution contained the ungrafted acrylic polymer.

The solution portion was carefully removed from the centrifuge tube. After evaporation of the solvent the molecular weight of the acrylic polymer was determined by gpc (gel permeation chromatography) to be 37,700 (number average). The weight average molecular weight was 153,000. It was assumed that the molecular weight of this acrylic polymer that had not become attached to the EPDM during the polymerization was the same as that of the acrylic segment that had become attached.

The plug was subjected to this dissolution / precipitation / centrifugation procedure two additional times to remove the last traces of ungrafted acrylic polymer. After thorough drying the plug was analyzed for elemental composition. The carbon content (82.7%) indicates a ratio of grafted acrylic to total EPDM of 0.13 and a per cent of acrylic polymer grafted of 15% of the total formed.

EXAMPLE 18 This example illustrates the co-imidization of the EPDM / / methyl methacrylate graft of Example 17 with additional PMMA. The latter was added so as to facilitate processing in the imidization extruder, and also to prepare an intimate blend of poly(glutarimide) with a compatible impact modifier in one operation. The blend of the polymer of Example 17 with a homopolymer of methyl methacrylate (MW 147,000) was prepared by dry-blending. The process was conducted as in Example 1.

At a feed rate of polymer blend of 30 grams/ min., a screw speed of 250 rpm, a barrel temperature in the imidization zone of 250°C., an amine feed rate of 18.5 grams/min., and a gauge pressure of 4620 kPa, the graft copolymer was reacted with methylamine. The extruded strand was opaque white and the imidized blend had a Vicat softening temperature of 172°C, and a N content of 5.4%.

EXAMPLES 19 - 22 These examples illustrate properties of the imidized graft copolymer of Example 18, as well as properties when blended further with a second polyglutarimide having no rubber combined. This poly(glutarimide) was prepared from a homopolymer of methyl methacrylate of MW 147,000 with methylamine by the method of U.S. Patent 4,246,374, in equipment similar to that of Example 2, but without the zones used in alkylation. At a feed rate of polymer of 58 grams/ min., a screw speed of 325 rpm, a barrel temperature in the imidization zone of 275°C., an amine feed rate of 28 grams/min., and a gauge pressure of 6000 kPa, the copolymer was reacted with methylamine. The isolated polymer exhibited a Vicat softening temperature of 168-170°C, a nitrogen content of 6.87% (82.0 weight percent glutarimide groups),MW= 145,000. The resulting polymer is designated the polymer of Example 19.

Samples were milled on the electric mill at 245 degrees C to flux plus three minutes. Each formulation also contained 0. 1 % (4-t-butyl-3-hydroxy-2,6-dimethylbenzyl)-s-triazine-2,4,6-(1H,3H,5H) trione antioxidant, 0.2% dilaurylthiodipropionate thermal stabilizer, and 0.2% octadecyl 3,5-di-t-butyl-4-hydroxyhydrocinnamate antioxidant. While hot they were transferred to a 245 degree C press and held at 0.103 mPa in a 12.7 cm. X 12.7 cm. X 0.32 cm. mold for three minutes. This was followed by three minutes at 0.103 mPa in an unheated mold. Specimens were cut for notched Izod and microtensile testing.

| Ex. | Ex. 18 (%) | Ex. 19 (%) | Notched Izod (kg-cm/cm) | Tensile Strength (mPa) | Tensile Modulus (mPa) | Clash-Berg Torsional Modulus, mPa (at 120 C) | (at 160 C) |
|---|---|---|---|---|---|---|---|
| 18 | 100 | -- | 8.32 | 18.4 | 1054 | 112 | 19.3 |
| 19 | -- | 100 | 1.09 | 77.2 | 4085 | 1964 | 73.7 |
| 20 | 80 | 20 | 3.59 | 30.5 | 2046 | 590 | 152 |
| 21 | 60 | 40 | 4.08 | 42.8 | 2273 | 1226 | 207 |
| 22 | 40 | 40 | 2.45 | 49.2 | 2908 | 1295 | 137 |

EXAMPLES 23 - 28 These examples illustrate improvements in blends of a polyglutarimide with an ungrafted EPDM rubber by the presence of a EPDM/ / imidized polymethacrylate segmented copolymer. The imidized graft copolymer was that of Example 18 ; the imidized poly(methyl methacrylate) was similar to Example 19, but prepared at a polymer feed rate of 65 g./min., an amine feed rate of 35.5 g./min. and a pressure of 6650 kPa. It exhibited a Vicat softening temperature of 170°C. The EPDM rubbers used in the blends were commercial materials (Nordel 2722 in Example 23, which is described in Example 17, where it is the trunk for the graft copolymer, and Nordel 1040 in Examples 24 - 28). DuPont Nordel 1040 EPDM is an amorphous terpolymer of ethylene, propylene, and 1,4-hexadiene. The approximate composition is 35-45 % ethylene, 50-60% propylene, and 2-5% hexadiene. The measured glass transition temperature (by DSC) is -55 degrees C.

Blending was carried out as in Examples 20 - 22, and the same stabilizers were added. Example 23, with no compatibilizing segmented copolymer, left large deposits on the mill roll and the mold surfaces. The plaque surface was dull. Examples 24 - 26 released much more readily from the metal surfaces with no plate-out. The part surfaces were glossier. These are indications of greater compatibility of the blends containing the graft copolymer.

Impact strength results are also indicative of compatibilization of the EPDM and imide phases. Compatibilized EPDM acts as an impact modifier while the impact strength is very poor in the sample that is not compatibilized (Example 23).

| Expl. | Imide (%) | Added EPDM (%) | Graft Imide (%) | Notched Izod (kg-cm/cm) | Tensile Strength (mPa) | Tensile Modulus (mPa) | Torsional Clash-Berg, (120 C) | Modulus, mPa (160 C) |
|---|---|---|---|---|---|---|---|---|
| 23 | 84 | 16 | -- | 1.96 | 27.3 | 2210 | 659 | 12.3 |
| 24 | 20 | -- | 80 | 3.86 | 30.2 | 1900 | 1880 | 169 |
| 25 | 40 | -- | 60 | 3.32 | 40.7 | 2560 | 1120 | 95.7 |
| 26 | 49.6 | 10.4 | 40 | 3.00 | 26.2 | 1760 | 497 | 31 |
| 27 | 39 | 13 | 48 | 3.54 | 17.6 | 1180 | 1342 | 31 |
| 28 | 60 | 20 | 20 | 2.62 | 16.7 | 1600 | 449 | 9.5 |

EXAMPLES 29 - 33 These examples illustrate a blend of a polar polymer (polycaprolactam) and a non-polar polymer (polypropylene) whose properties are improved by the presence of a segmented copolymer containing polypropylene segments and segments containing glutarimide units. The compatibilizing polymers used are those of Examples 2, 15, and 16. The blends were prepared by blending pellets of the components, and extruding in a single-screw 25.4 mm. L/D 30/1 Killion extruder ; screw speed 100 rpm., melt temperatures 200-286°C. The blends were then injection molded into ASTM test pieces on a Newbury machine at barrel temperatures of ca. 220°C., screw speed 400 rpm, injection pressure 2070 kPa, back pressure 690 kPa, cycle time 45 seconds.

All blends were 1 :1 polycaprolactam and polypropylene. Test methods are standard ASTM determinations. Samples were conditioned at 50% relative humidity for 24 hours before testing. The visual appearance of all samples (smoothness and lack of irregularities) was improved for all samples. Heat distortion was improved in all cases, as was modulus. The increase in impact strength for the blend with Example 2 was unexpected,

as that graft copolymer is not based on a rubbery polyolefin trunk.

In Example 33 is shown the behavior of a similar glutarimide polymer which has no grafting to a polyolefin. The polymer is prepared by the method taught by Kopchik to produce a polymer with free acid and anhydride groups, and a Vicat softening temperature of ca. 170°C.

When compared with the blends containing grafted polymers, modulus is reduced, as is distortion temperature under flexural load, (DTUFL) in comparison to the graft polymer of Example 15 containing acid groups. It is known the alkylation reaction to remove acid and anhydride groups by conversion to ester groups generally lowers DTUFL.

| Example | Graft Imide,% | Elongation at Break, % | Modulus, MPa | Unnotched Izod, J/m | DTUFL,°C @ 1.82 MPa |
|---|---|---|---|---|---|
| 29 | 0 | 13 | 1420 | 203 | 53.5 |
| 30 | Ex.2, 20% | 202 | 1830 | 631 | 72.7 |
| 31 | Ex.15,20% | 3 | 2060 | 189 | 90.6 |
| 32 | Ex.16,20% | 12 | 2060 | 284 | 75.4 |
| 33 | #, 20% | 7 | 1950 | 227 | 84.3 |

# : Non-grafted polyglutarimide : total acid / anhydride 6.7%

EXAMPLES 34 - 35 These examples illustrate the ability of a graft copolymer of imidized poly(methyl methacrylate) onto polypropylene to improve the physical properties of a blend of a polyalkylene terephthalate and a polyolefin. The blend was a 1 :1 blend of polyethylene terephthalate (commercial molding-grade resin ; no additives) and polypropylene (commercial homopolymer, mfr=0.4). The graft copolymer was that of Example 2. Blending was accomplished as in Examples 29 - 33.

| Example | Graft Imide,% | Elongation at Break, % | Modulus, MPa | Unnotched Izod, J/m | DTUFL,°C @ 1.82 MPa |
|---|---|---|---|---|---|
| 34 | 0 | 28.8 | 1770 | 453.7 | 82.9 |
| 35 | Ex.2, 10% | 138.9 | 1920 | 506.7 | 91.8 |

EXAMPLES 37 - 40 These examples illustrate the ability of the imidized graft copolymers of methyl methacrylate onto polypropylene to improve the sag resistance of polypropylene. The polymer of Example 5 was blended with polypropylene homopolymer (mfr=4) at several levels, and resistance to sag tested as described in U.S. Application 315,501 and European Unexamined Application 315,649. A lower value indicates improved resistance to sag when the imidized graft copolymer is present.

The polyolefin blends were compression molded in an electrically heated Carver press 15 x 15 cm or Farrel press 30.5 x 30.5 cm. The samples (as extruded pellets) were molded between aluminum plates with an appropriate spacer to provide the required thickness 0.25-3.8 mm. This was then placed in the press set at 190 C and pressed at high pressure (68-91 metric tonnes for the Farrel press and 6820 kg for the Carver press). After three minutes the mold was placed in an unheated press at high pressure for three minutes. A five minute preheat was used while maintaining a slight pressure on the press.

The sag tests are performed on a compression molded sheet 10 x 10 x 0.15 cm. This sheet was clamped in a frame with a 7.6-cm-square opening. There were metal rulers attached to the front and back of the frame for use in measuring sag. The frame and sheet were placed in a hot, forced air oven (typically at 190 C). The amount of sag of the center of the sheet was then recorded as a function of time. Typically, the sag was first recorded at 2.5 cm but for slow sagging materials, sags as low as 16 mm were recorded. Data were recorded up to 10.2 cm of sag or for 30 minutes, whichever occurred first. The term "slope" refers to the slope of a plot of the natural logarithm of the sag in centimeters vs time, resulting in a straight line. A high slope indicates that the material sags quickly while a low slope indicates that it sags slowly. The advantage of comparing slopes in this manner is that it eliminates any differences in oven cooling when the sample is introduced (due to differences in the time the oven is open, room temperatures, etc.).

| Polymer of Example | Example 5, wt. % | Sag slope |
|---|---|---|
| 37 | 0 | 0.20 - 0.25 |
| 38 | 4 | 0.18 |
| 39 | 6 | 0.08 |
| 40 | 8 | 0.05 |

EXAMPLES 41 - 44 In these examples are shown the effect of an acid-reduced imidized graft copolymer of polyglutarimide onto polypropylene when used to compatibilize blends of ethylene-vinyl acetate copolymer with polycaprolactam and with a styrene-acrylonitrile copolymer. The ethylene-vinyl acetate polymer was a commercial material (DuPont Elvax 170, believed to contain ca. 36 weight percent vinyl acetate). The polycaprolactam was that used in Examples 29-33, a commercial homopolymer of MW 20,000 to 30,000. The styrene/acrylonitrile was a commercial copolymer of 25 wt. percent acrylonitrile content, melt flow rate 0.75 g/minute, and sold for injection molding purposes. Blends were made at a 70 :30 weight ratio of polycaprolactam (or styrene/acrylonitrile copolymer) to the ethylene-vinyl acetate copolymer. When polyglutarimide was present, it was as 10% by weight of the overall mixture. Samples were mixed as pellet blends without drying, extruded in a 25.4 mm. single screw extruder equipped with a mixing screw at temperature settings for zones and die of 215 to 230°C. The pellet mixes were then injection molded into ASTM test pieces on a Newbury machine at barrel temperatures of ca. 218°C., screw speed 400 rpm, injection pressure 2070 kPa, back pressure 690 kPa, cycle time 45 seconds, mold temperature 82°C. Heat distortion temperature at 1.82 mPA was raised 1°C for Ex. 42 over 41, and from 90 °C (Example 43) to 94°C (Example 44).

| | Weight Percent | | | |
|---|---|---|---|---|
| Example | Ethylene-vinyl acetate copolymer | Polycapro-caprolactam copolymer | Styrene-acrylonitrile | Imidized Graft Copolymer of Example 4 |
| 41 | 30 | 70 | -- | -- |
| 42 | 27 | 63 | -- | 10 |
| 43 | 30 | -- | 70 | -- |
| 44 | 27 | -- | 63 | 10 |

| Example | Elongation @ break, % | Modulus, (mPa) | Unnotched Izod, J/m | Notched Izod, J/m | Dynatup, Load at Break, kg |
|---|---|---|---|---|---|
| 41 | 243 | 1226 | buckled | 92 | 280 |
| 42 | 289 | 1420 | buckled | 92 | 107 |
| 43 | 3.4 | 1780 | 196 | 20 | 35 |
| 44 | 4.4 | 2020 | 243 | 23 | 35 |

EXAMPLE 45 - 46 These examples illustrate blending of polypropylene (mfr = 0.4, as used in Example 29) with an ethylene-vinyl acetate copolymer in the absence or presence of a polyglutarimide segmented copolymer. The ethylene copolymer was that used in Examples 41 - 44, as was the graft copolymer of a polyglutarimide onto polypropylene. The blend ratios were polypropylene/ethylene-vinyl acetate/polyglutarimide of 70/30/0 (Example 45) and 63/27/10 (Example 46). Processing was as in Examples 41 - 44. Heat distortion temperature at 1.82 mPA was raised from 56°C (Example 45) to 58°C (Ex. 46).

| Example | Elongation @ break, % | Modulus, (mPa) | Unnotched Izod, J/m | Notched Izod, J/m | Dynatup, Load at Break, kg |
|---|---|---|---|---|---|
| 45 | 530 | 861 | buckled | 42 | 244 |
| 46 | >500 | 990 | buckled | 65 | 257 |

EXAMPLES 47 - 48 These examples illustrate compatibilization of a polar ethylene-vinyl alcohol copolymer, containing 32 mol % ethylene and polypropylene (mfr=0.4) with the segmented copolymer of Example 4. The blend ratios were polypropylene / ethylene-vinyl alcohol/polyglutarimide of 70/30/0 (Example 47) and 63/27/10 (Example 48). Processing was as in Examples 41 - 44. Heat distortion temperature at 1.82 mPA was raised from 70°C (Example 45) to 74°C (Ex. 46).

| Example | Elongation @ break, % | Modulus, (mPa) | Unnotched Izod, J/m | Notched Izod, J/m | Dynatup, Load at Break, kg |
|---|---|---|---|---|---|
| 47 | 11.2 | 1950 | 230 | 36 | 45 |
| 48 | 54 | 1840 | 463 | 28 | 60 |

## Claims

1. A segmented copolymer comprising :
   a) at least one polyolefin segment ;
   b) at least one segment of polymer of at least 20,000 weight average molecular weight containing imide units of the structure

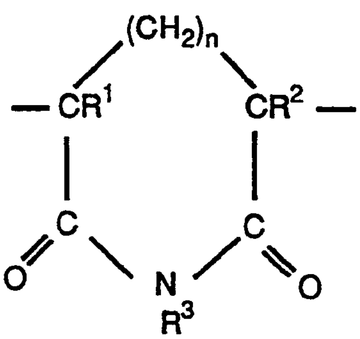

or

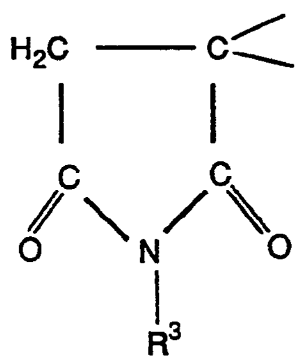

   wherein n is 0 or 1, $R^1$ and $R^2$ are separately H or $C_1$-$C_{20}$ alkyl, and $R^3$ is H, alkyl, substituted alkyl, cycloalkyl, substituted cycloalkyl, alkaryl, substituted alkaryl, aryl, substituted aryl, aralkyl, substituted aralkyl, heterocyclic or substituted heterocyclic, which is not a polymer of 60 wt % or more vinyl aromatic monomer units and 40 wt % or less maleimide units.

2. A copolymer as claimed in Claim 1 wherein n is 1, $R^1$ and $R^2$ are H or $CH_3$, and $R^3$ is H or alkyl, or n is 1 and $R^1$, $R^2$ and $R^3$ are all $CH_3$.

3. A copolymer as claimed in Claim 1 or 2 wherein the polyolefin segment predominantly comprises propylene or ethylene units.

4. A copolymer as claimed in any preceding Claim wherein the weight ratio of polyolefin segments to the sum of all other segments is from about 1 :9 to about 9 :1, preferably 3 :7 to about 7 :3.

5. A copolymer as claimed in any preceding Claim wherein the polymer containing imide units further contains units derived from at least one of the following : alkyl acrylate, alkyl methacrylate, methacrylic acid, methacrylic anhydride ; and preferably contains units from methyl methacrylate.

6. A copolymer as claimed in any preceding Claim wherein the weight fraction of units of imide is greater than 40% of all units in the segmented stage containing imide.

7. A process for preparing a segmented copolymer as claimed in Claim 1, comprising :
(a) preparing a segmented copolymer wherein at least one segment comprises olefin polymer and at least one segment comprises copolymer of at least 20,000 weight average molecular weight containing units of at least one of the structures :

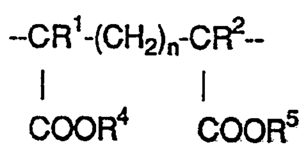

or

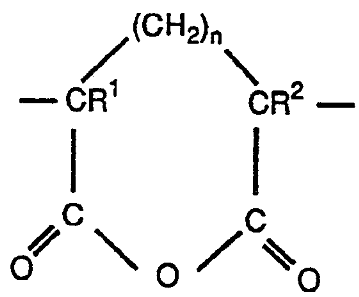

or

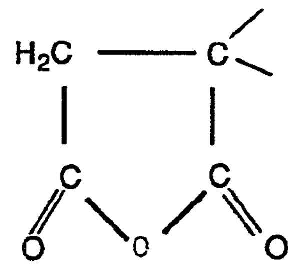

wherein $R^4$ and $R^5$ are individually H, alkyl, substituted alkyl, cycloalkyl, substituted cycloalkyl, alkaryl, substituted alkaryl, aryl, substituted aryl, aralkyl, substituted aralkyl, heterocyclic, substituted heterocyclic-$CONR^6R^7$, n is 0 or 1, $R^6$ and $R^7$ are H or alkyl, and $R^1$ and $R^2$ are H or $CH_3$ ;
b) reacting the copolymer from (a) with a primary amine $R^3NH_2$, wherein $R^3$ is as defined in Claim 1 to convert units of at least one structure

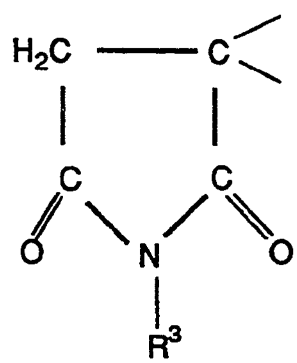

to units of the structure

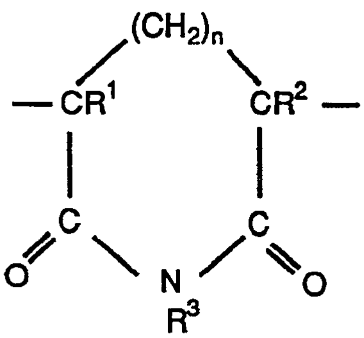

or

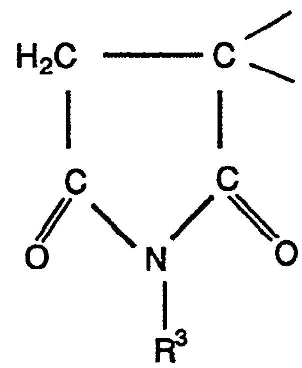

wherein n is 0 or 1 ;

c) optionally purifying the segmented copolymer by removal of unreacted primary amine ;

d) optionally reacting the segmented copolymer with an alkylating agent so as substantially to lower the content of units derived from acid or anhydride groups ;

e) optionally isolating the segmented copolymer in solid form.

**8.** A process as claimed in Claim 7, wherein the segmented copolymer prepared in (a) comprises graft copolymer containing segments of at least one polyolefin and segments of polymer comprising at least 80% by weight of units of methacrylic ester of the formula $CH_2=C(CH_3)COOR^4$, wherein $R^4$ is as defined in Claim 7.

**9.** A process as claimed in Claim 7 or 8, wherein the reaction with the primary amine, any optional purification, and any optional alkylation reaction are conducted in a devolatilizing extruder.

**10.** A blend comprising a segmented copolymer as claimed in any of Claims 1 to 6 and one or more other polyolefin.

**11.** A blend as claimed in Claim 10, optionally in the form of sheet, film, molded object or other shaped article, wherein the polyolefin segment(s) and the other polyolefin are polypropylene or polyethylene.

**12.** A blend, optionally in the form of sheet, film, moulded object or other shaped article, comprising :

(a) segmented polymer as claimed in any of Claims 1 to 6

(b) at least one polar polymer, at least one of which is compatible with at least the imide-containing segment of (a) ;

(c) optionally, at least one non-polar polymer.

**13.** A blend as claimed in Claim 12 containing polyethylene, polypropylene or ethylene-propylene copolymer as non-polar polymer and wherein n is 1, $R^1$ is H or $CH_3$, $R^2$ is H or $CH_3$ and $R^3$ is H or alkyl.

**14.** The use of segmented polymer as claimed in any of Claims 1 to 6 to aid compatibility of polar polymers by incorporating it by thermal processing into a blend as claimed in Claim 12 of the three components.

**15.** The use as claimed in Claim 14, as segmented polymer, of graft copolymer comprising, as the olefin polymer segment(s), homopolymer or copolymer of ethylene, propylene, butylene and / or 4-methylpentene optionally containing less than 10% by weight of higher monoolefin and/or unconjugated diene, and, as the imide-containing segment(s), polymer containing units of the formula

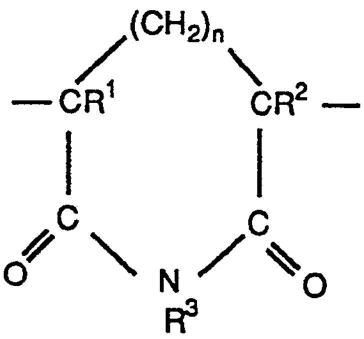

wherein $R^1$ and $R^2$ are, individually H or $CH_3$, preferably both $CH_3$, and $R^3$ is H or alkyl, preferably methyl; the weight ratio of olefin polymer segment(s) to imide-containing polymer segment(s) being 1 :9 to 9 :1.

16. The blend of Claim 12 or 13 or, use of Claim 14 or 15 wherein, the polar polymer comprises polyamide or polyalkylene terephthalate and any non-polar polymer comprises polypropylene.